# EUROPÄISCHE PATENTSCHRIFT

(11) **EP 3 003 708 B1**
(45) Veröffentlichungstag und Bekanntmachung des Hinweises auf die Patenterteilung: **15.07.2026**
(21) Anmeldenummer: 14734386.7
(22) Anmeldetag: 28.05.2014
(51) Int. Cl.: B32B 7/02, B32B 27/08, B32B 27/32, B65D 65/40

(54) **SIEGELFÄHIGE POLYPROPYLENFOLIE**
SEALABLE POLYPROPYLENE FILM
FEUILLE EN POLYPROPYLÈNE POUVANT ÊTRE SCELLÉE

(30) Priorität: 04.06.2013 DE 102013009290
(43) Veröffentlichungstag der Anmeldung: 13.04.2016
(73) Patentinhaber: Polyopt GmbH, 66111 Saarbrücken (DE)
(72) Erfinder: DÜPRE, Yvonne, 67677 Enkenbach-Alsenborn (DE); HÜTT, Detlef, 66265 Heusweiler (DE)
(74) Vertreter: Wächtershäuser & Hartz Patentanwaltspartnerschaft mbB
(86) Internationale Anmeldenummer: PCT/EP2014/001437
(87) Internationale Veröffentlichungsnummer: WO 2014/194994

(56) Entgegenhaltungen:
- EP-A1- 0 562 496
- EP-A2- 0 781 652

## Beschreibung

Die vorliegende Erfindung betrifft eine siegelfähige Polypropylenfolie, eine siegelfähige metallisierte Polypropylenfolie und deren Verwendung in Laminaten, sowie ein Verfahren zur Herstellung von Beutelverpackungen aus diesen Laminaten, bzw. aus diesen Folien.

Biaxial orientierte Polypropylenfolien (boPP) werden heute als Verpackungsfolien in den verschiedensten Anwendungen eingesetzt. Polypropylenfolien zeichnen sich durch viele vorteilhafte Gebrauchseigenschaften wie eine hohe Transparenz, Glanz, Barriere gegen Wasserdampf, gute Bedruckbarkeit, Steifigkeit, Durchstoßfestigkeit etc. aus. Neben den transparenten Folien haben sich opake Polypropylenfolien in den vergangenen Jahren sehr erfolgreich entwickelt. Zum einen ist die besondere Optik (Opazität und Weißgrad) dieser Folien für einige Anwendungen besonders wünschenswert. Zum anderen bieten opake Folie dem Anwender eine höhere Ausbeute auf Grund der reduzierten Dichte dieser Folien. In einigen Anwendungen trägt die vakuolenhaltige Basisschicht zu einer weiteren Verbesserung von gewünschten Folieneigenschaften bei.

Trotz dieser Vielfalt günstiger Eigenschaften gibt es noch heute Bereiche in denen die Polypropylenfolie mit anderen Materialien kombiniert werden muß, um bestimmte Defizite auszugleichen. Insbesondere für feuchtigkeits- und sauerstoffempfindliche Füllgüter konnten sich Polypropylenfolien als alleiniges Verpackungsmaterial bisher nicht durchsetzen. Beispielsweise spielt im Bereich der Snack Verpackung sowohl die Wasserdampfbarriere als auch die Sauerstoffbarriere eine entscheidende Rolle. Bei einer Wasseraufnahme von nur etwa 3% werden Kartoffelchips und andere Snackartikel so pappig, daß der Verbraucher sie als ungenießbar empfindet. Zusätzlich muß die Sauerstoffbarriere sicherstellen, daß die in den Snackartikeln enthaltenen Fette nicht durch Photooxidation einen ranzigen Geschmack entwickeln. Diesen Anforderungen genügt die Polypropylenfolie alleine als Verpackungsmaterial nicht.

Es ist bekannt die Barriereeigenschaften von boPP durch eine Metallisierung zu verbessern, wodurch sowohl die Wasserdampf- als auch die Sauerstoffdurchlässigkeit erheblich erniedrigt wird. Beispielsweise kann die Sauerstoffdurchlässigkeit einer transparenten 20µm boPP Folie durch Metallisierung und Laminierung mit einer weiteren 20µm transparenten Folie auf ca. 40 cm³/m² * Tag * bar reduziert werden. (siehe VR Interpack 99 Special D28 "Der gewisse Knack").

Bei Anwendungen für besonders empfindliche Produkte ist sogar die Barriere der metallisierten boPP-Folien nicht ausreichend. In solchen Fällen wird die Laminierung eines Substrats mit einer Aluminiumfolie bevorzugt. Diese Verpackung ist sehr viel aufwendiger und teurer als Verbunde aus metallisierter boPP-Folie, aber sie bietet auf Grund der Laminierung mit der hochdichten Aluminiumfolie eine hervorragende Sauerstoffbarriere. Beispielsweise werden derartige Laminate mit Aluminiumfolie für sogenannte Tütensuppen und Fertigsaucen (z.B. Maggi-Fix Produkte) und ähnliche pulverförmige Füllgüter eingesetzt, die auf Grund des hohen Fettgehaltes und der großen Oberfläche der Pulver vor Licht und Sauerstoff besonders effektiv geschützt werden müssen.

Ein zusätzliches Problem bei einer Beutelverpackung für derartige Pulver ist die Kontamination des Siegelbereiches. Zur Herstellung der Beutelverpackung (Vierrandsiegelung) werden zunächst drei Ränder gesiegelt und damit ein oben geöffneter Beutel hergestellt. Danach erfolgt die Befüllung des Beutels mit dem Pulver, wobei sich Stäube des Pulvers auch im Bereich der vierten Siegelnaht niederschlagen. Mit den gängigen Verfahren zum Abpacken von Pulvern kann diese Verunreinigung der Siegelbereiche nicht wirksam verhindert werden. Diese Verunreinigungen führen häufig zu Problemen beim Siegeln. Die Siegelnähte haben in den kontaminierten Bereichen eine verringerte oder gar keine Festigkeit, die Dichtigkeit der Siegelnaht ist ebenfalls beeinträchtigt.

Nach der Befüllung der Beutel auf der Verpackungsmaschine werden die Siegelnähte der geschlossenen Beutel zusätzlich stark beansprucht, dadurch daß mehrere befüllte Beutel durch einen Greifroboter zusammen vom Förderband entnommen und dicht gepackt in einen Karton gesteckt werden. Die einzelnen Beutel werden dabei allein durch den seitlichen Anpreßdruck des Greifroboters gehalten. Damit die Siegelnähte diesem Anpreßdruck widerstehen, müssen sie über eine besonders hohe Siegelnahtfestigkeit verfügen.

Diese Probleme konnten in der Vergangenheit nur durch Laminierung der jeweiligen Verbunde mit einer besonderen Siegelfolie gelöst werden. Daher umfassen heutige Verbundmaterialien für derartige Pulver zusätzlich zu der Aluminiumfolie, die die Barriere sicherstellt, eine spezielle Siegelfolie, welche auch bei Kontamination siegelt und einen erhöhten Berstdruck der Beutelverpackung gewährleistet, sowie gegebenenfalls weitere Bestandteile.

In einigen Anwendungen werden boPP-Folien auch nur im Hinblick auf den optischen Eindruck metallisiert. Hier soll beim Verbraucher der Eindruck einer hochwertigen Verpackung entstehen, ohne daß tatsächlich eine bessere Barriere vorliegt. In diesen Fällen sind die Anforderungen an die metallisierte Folie vergleichsweise unkritisch. Die metallisierte Folie muß nur eine gleichmäßige Optik und eine hinreichende Metallhaftung aufweisen.

Die EP-A-1597073 beschreibt eine vakuolenhaltige, opake, metallisierte Polypropylenfolie mit besonderen Barriereigenschaften. Nach dieser Lehre können auch opake Polypropylenfolien nach Metallisierung sehr gute Barrierewerte aufweisen, wenn die metallisierte Deckschicht aus einem speziellen Propylen-Copolymeren mit niedrigem Ethylengehalt aufgebaut ist und eine Mindestdicke von 4µm hat. Auf Grund dieser guten Barrierwerte können diese metallisierten opaken Folie als Bestandteil eines Laminats für Tütensuppen eingesetzt werden.

EP 0 562 496 beschreibt eine biaxial orientierte schrumpffähige Folie, welche eine niedrig siegelnde Deckschicht aus einem Blend aufweist. Das Blend enthält ein VLDPE und ein Ethylen-Alpha-Olefin Plastomer. Die Basisschicht der Folie kann aus VLDPE,LLDPE, Polypropylene, Ethylene-Propylene Copolymer, Ethylene Butene-1 Copolymer, oderaus einem Blend der Ethylene Alpha-olefin Copolymeren aufgebaut sein. Es wird beschrieben,dass zusätzlich Zwischenschichten aus Folien-Reclaim angebracht sein können. EineKombination aus einer Polypropylen-Basisschicht und einer weichen Zwischenschicht geht ausder EP 0 562 496 nicht hervor. EP 0 781 652 beschreibt eine peelfähige opake Folie mit einer weichen Zwischenschicht aus statistischen Copolymeren und einer peelfähigen Deckschicht aus einem Polymerblend aus zwei unverträglichen Polymeren. Die Folie kann als Deckelfolie auf PP-Behältern eingesetztwerden und läßt sich kontrolliert abziehen, ohne dass die Folie spleißt oder zerreisst. Beutel Verpackungen aus dieser Folien sind nicht erwähnt.

Der vorliegenden Erfindung lag die Aufgabe zu Grunde eine siegelfähige Folie zur Verfügung zu stellen, welche für die Herstellung von Beutelverpackungen geeignet ist. Die Beutelverpackung muß das Füllgut vor Feuchte und Sauerstoffzufuhr besonders gut schützen. Die Siegelnaht der Beutelverpackung muß eine gute Festigkeit aufweisen, die auch bei Kontaminierung im Bereich der Siegelnaht erzielt werden kann. Die Beutelverpackung muß dem Überdruck der Packung standhalten, so daß keine Druckverluste über die Zeit auftreten. Die Siegelnaht muß gegenüber dem Pressdruck des Greifroboters mechanisch stabil sein, d.h. es darf nicht zum Bersten der Verpackung kommen. Alle diese Eigenschaften müssen auch dann sichergestellt sein, wenn es beim Abpacken zu einer Verschmutzung des Siegelbereichs durch das Füllgut, beispielsweise durch Pulver, kommt.

Es war somit Aufgabe der vorliegenden Erfindung eine metallisierte Folie mit speziellen Siegeleigenschaften zur Verfügung zu stellen. Zusätzlich muß die Folie nach der Metallisierung hervorragende Barriereeigenschaften, insbesondere gegenüber Sauerstoff und Wasserdampf aufweisen. Die sonstigen üblichen Gebrauchseigenschaften der Folie im Hinblick auf ihre Verwendung als Laminatbestandteil sollen erhalten bleiben.

Die Anwendung als Beutelverpackung beinhaltet somit ein komplexes Anforderungsprofil, d.h. die Folie muß gleichzeitig eine ganze Reihe von Anforderungen erfüllen.

Die der Erfindung zugrundeliegende Aufgabe wird gelöst durch eine biaxial orientierte, mehrschichtige Polypropylenfolie gemäß Anspruch 1.

Die Aufgabe wird weiterhin gelöst duch eine Beutelverpackung aus den erfindungsgemäßen Laminaten oder durch eine Beutelverpackung, welche die erfindungsgemäße Folie enthält.

Die Unteransprüche geben bevorzugte Ausführungsformen der Erfindung an.

Im Sinne der vorliegenden Erfindung ist die Basisschicht diejenige Schicht der Folie welche mehr als 50%, vorzugsweise mehr als 65% der Gesamtdicke der Folie ausmacht. Zwischenschichten sind Schichten, die zwischen der Basisschicht und den jeweiligen Deckschichten liegen. Die erste siegelfähige Deckschicht I bildet eine Außenschicht der coextrudierten Folie, die in der fertigen Beutelverpackung die Innenseite dieses Beutels bildet. Diese erste siegelfähige Deckschicht I befindet sich erfindungsgemäß in Kontakt mit der weichen, ersten Zwischenschicht I. Eine zweite Deckschicht II kann unmittelbar auf der Basisschicht oder auf einer zweiten Zwischenschicht II aufgebracht sein. Die Oberfläche der zweiten Deckschicht II ist zur Metallisierung vorgesehen (Metallisierseite der Folie). Im Falle einer Laminierung der erfindungsgemäßen Folie mit einer weiteren Folie wird gegen diese Metallschicht laminiert.

Im Rahmen der vorliegenden Erfindung wurde gefunden, daß vakuolenhaltige Folien nach dem Stand der Technik, zwar trotz der Vakuolen in der Basisschicht eine gute Barriere nach Metallisierung haben können, aber die maximal erzielbare Siegelnahtfestigkeit dieser Folien mit vakuolenhaltiger Basisschicht ist nicht ausreichend. Insbesondere bersten Beutel-Verpackungen, die aus diesen Folien hergestellt werden, zu häufig.

Die vorliegende Erfindung geht daher von den bekannten metallisierten transparenten, d.h. vakuolenfreien, coextrudierten Folien aus, welche grundsätzlich nach Metallisierung akzeptable bis gute Barriereeigenschaften aufweisen. Verschiedene Modifikationen der coextrudierten Siegelschicht dieser bekannten Folien wurden im Rahmen der vorliegenden Erfindung untersucht, um die Siegeleigenschaften dieser metallisierten Folien zu verbessern. Das Problem konnte hierdurch jedoch nicht befriedigend gelöst werden.

Überraschenderweise wurde gefunden, daß die Barriereeigenschaften und die Siegeleigenschaften der erfindungsgemäßen Folien verbessert sind, wenn die transparente Folie eine zusätzliche, weiche Zwischenschicht aufweißt, die mit der ersten siegelfähigen Deckschicht I verbunden ist. Durch die weiche Zwischenschicht I wird die Qualität der Siegelnaht durch Pulververunreinigungen wesentlich weniger beeinträchtigt. Die Beständigkeit der Siegelung gegenüber dem Innendruck der Verpackung ist verbessert, wodurch der Innendruck der Beutelverpackung deutlich erhöht werden kann, ohne daß es bei der Verarbeitung zum Bersten der Verpackung kommt. Trotz des stark erhöhten Innendrucks treten keine wesentlichen Druckverluste auf, d.h. der Druckverlust eines Beutels ist stark verbessert. Des weiteren sind die Barriereeigenschaften der metallisierten erfindungsgemäßen Folien durch diese Maßnahme gegenüber ähnlich aufgebauten Folien ohne eine weiche Zwischenschicht verbessert.

Die erfindungsgemäße metallisierte Folie bietet somit gegenüber bekannten transparenten metallisierten Folien verbesserte Siegeleigenschaften, insbesondere Siegelnähte mit einer besonderen mechanischen Festigkeit und eine verbesserte Barriere nach Metallisierung sowohl gegenüber Wasserdampf als auch gegenüber Sauerstoff. Diese Folie kann daher besonders vorteilhaft zur Herstellung von Beutelverpackungen für Wasserdampf- und Sauerstoff-empfindliche pulverförmige Füllgüter eingesetzt werden Die Beutelverpackung aus der erfindungsgemäßen Folie zeichnet sich weiters durch geringe Druckverluste und höhere Berstfestigkeiten aus.

Die erfindungsgemäße Folie zeichnet sich unter anderem dadurch aus, daß sie im Wesentlichen keine Vakuolen enthält. Somit sind alle Schichten der erfindungsgemäßen Folien im Wesentlichen vakuolenfrei, d.h. alle Schichten der Folie, insbesondere auch die Basisschicht, enthalten keine vakuoleninitierenden Füllstoffe. Da die Folie keine Vakuolen enthält zeigt sie keine reduzierte Dichte gegenüber den Komponenten aus denen sie aufgebaut ist. Vakuolenfrei bedeutet somit im Sinnne der vorliegenden Erfindung, daß die Dichte der Folie der Dichte der Ausgangsstoffe und ihrem jeweiligen Anteil in der Folie entspricht. Im Wesentlichen vakuolenfrei bedeutet insbesondere, daß die Dichte der Folie um maximal 5%, insbesondere um maximal 2% gegenüber der rechnerischen Dichte reduziert ist. Die rechnerische Dichte ist diejenige Dichte, die aus der Dichte der Komponenten und deren Anteil in der Folie errechnet wird. Transparente Ausführungsformen der erfindungsgemäßen Folie haben somit eine Dichte von 0,86 bis 0,92g/cm³, vorzugsweise von 0,88 bis 0,92g/cm³, insbesondere von 0,90 - 0,92g/cm³, die im wesentlichen der Dichte von Polypropylen (0,90 - 0,92g/cm³) entspricht.

### Basisschicht

Die Basisschicht der erfindungsgemäßen Mehrschichtfolie enthält im wesentlichen Polyolefin, vorzugsweise Propylenpolymere, und gegebenenfalls weitere übliche Additive in jeweils wirksamen Mengen, sowie gegebenenfalls Pigmente.

Die Basisschicht enthält mindestens 50 Gew.-%, vorzugsweise 60 bis 99 Gew.- %, insbesondere 70 bis 98 Gew.-%, Polyolefine, jeweils bezogen auf das Gewicht der Basisschicht, wobei die Basisschicht mindestens 50 Gew.-%, bezogen auf das Gewicht der Basisschicht, Polypropylen enthält Polyolefine der Basisschicht sind im Allgemeinen nicht-weiche Polymere, wobei die Charakteristika von weichen Polymeren im Einzelnen im Zusammenhang mit der Zwischenschicht I näher erläutert werden. Die Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 150 bis 170°C, und im allgemeinen einen Schmelzflußindex von 1 bis 10 g/10 min, vorzugsweise 2 bis 8 g/10 min, bei 230°C und einer Kraft von 21,6 N (DIN 53735). Isotaktisches Propylenhomopolymer mit einem ataktischen Anteil von 15 Gew.-% und weniger, Copolymere von Ethylen und Propylen mit einem Ethylengehalt von 5 Gew.-% oder weniger, Copolymere von Propylen mit C₄-C₈-Olefinen mit einem C₄-C₈-Olefingehalt von 5 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält.

In einer weiteren Ausführungsform kann die Basisschicht zusätzlich opazifizierende, d.h. opak machende, Pigmente enthalten, wobei der Polymeranteil entsprechend reduziert wird. Diese Ausführungsformen haben ein weißes, undurchsichtiges Erscheinungsbild, d.h. sie sind opak, jedoch vakuolenfrei, da Pigmente im wesentlichen keine Vakuolen initiieren. Pigmente werden in einer Menge von maximal 25 Gew.-%, vorzugsweise 0,5 bis 15 Gew.-%, insbesondere 2 bis 10 Gew.-%, bezogen auf das Gewicht der Basisschicht, zugesetzt. Es ist erfindungswesentlich, daß die Pigmente im wesentlichen keine Vakuolen initiieren, da die Folie insgesamt vakuolenfrei sein muß. "Opak" bedeutet im Sinne der vorliegenden Erfindung eine Lichtdurchlässigkeit der Folie von (ASTM-D 1003-77) höchstens 70 %, vorzugsweise höchstens 50 %.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. Damit die Pigmente keine Vakuolen erzeugen, müssen sie einen mittleren Teilchendurchmesser im Bereich von 0,01 bis maximal 1 µm aufweisen. Der Begriff "Pigmente" umfaßt sowohl sogenannte "Weißpigmente", welche die Folien weiß einfärben, gegebenfalls wären auch "Buntpigmente", welche der Folie eine bunte oder schwarze Farbe verleihen möglich. Im allgemeinen liegt der mittlere Teilchendurchmesser der Pigmente im Bereich von 0,01 bis 1 µm, vorzugsweise 0,01 bis 0,7 µm, insbesondere 0,01 bis 0,4 µm.

Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolin-Ton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden. Titandioxid ist besonders bevorzugt. Verschiedene Modifikationen und Beschichtungen von TiO₂ sind an sich im Stand der Technik bekannt.

Für opake Ausführungsformen mit Pigmenten, wie TiO₂, beispielsweise in der Basisschicht und/oder der ersten Zwischenschicht I, ist die Dichte der Folie durch den Zusatz von TiO₂ gegenüber der Dichte von Polypropylen erhöht. Für diese Ausführungsformen der erfindungsgemäßen Folie liegt die Dichte vorzusgweise in einem Bereich von 0,91 bis 0,95g/cm³, insbesondere 0,92 bis 0,94g/cm³. Auch diese Dichte der opaken Ausführungsform der Folie ist gegenüber der rechnerischen Dichte im wesentlichen nicht reduziert, d.h. die genannte Dichte liegt ebenfalls maximal 5%, vorzugsweise maximal 2% unter der rechnerischen Dichte, die sich aus der Dichte der Komponenten und deren Anteil in der Folie errechnet.

### Weiche Zwischenschicht I

Die erfindungsgemäße Mehrschichtfolie umfaßt mindestens eine erste, zwischen der Basisschicht und der siegelfähigen Deckschicht I aufgebrachte, weiche Zwischenschicht I. Erfindungsgemäß ist diese weiche Zwischenschicht I aus Polyolefinen aufgebaut, welche weicher als die Polyolefine der Basisschicht sind. Es können verschiedene Kriterien für die Auswahl eines weichen Polyolefins herangezogen werden, beispielsweise der Schmelzpunkt Tm, der Erweichungspunkt, die Merkmale der 2.Aufheizkurve einer DSC-Messung und/oder die Breite des Schmelzebereichs oder die Kristallinität oder auch die Shore-Härte der Polyolefine. Die weiche Zwischenschicht I kann aus einem oder aus mehreren weichen Polymeren aufgebaut sein. Bevorzugt werden die weichen Polymeren auch mit anderen nicht-weichen Polymeren gemischt, d.h mit solchen Polymeren, die die nachstehend beschriebenen Kriterien für die weichen Polymeren nicht erfüllen. Derartige Mischungen, welche mehrere weiche Polyolefine oder weiche und nicht-weiche Polyolefine enthalten, werden nachstehend zusammengefaßt als "Mischungen" bezeichnet.

Weiche Polyolefine unterscheiden sich von "nicht-weichen" Polyolefinen durch ihr Schmelzverhalten. Weiche Polyolefine beginnnen bereits bei vergleichweise niedrigeren Temperaturen zu erweichen, so daß der Schmelzvorgang ein ehr kontinuierlicher Prozesse ist, der über einen sehr breiten Temperaturbereich stattfindet. Weiche Polyolefine zeigen bei einer DSC-Messung eine 2.Aufheizkurve, die bereits ab 20 bis 70°C kontinuierlichen ansteigt (A), ein erstes lokales Maximum (Erweichungspunkt B) bei einer Temperatur von >90°C erreicht und dann in das eigentliche Maximum der Aufheizkurve (C), dem Schmelzpunkt Tm, übergeht. Wenn alle Anteile des weichen Polyolefins oder der Mischung aufgeschmolzen sind, fällt die Aufheizkurve wieder auf die Basislinie ab (D). Der Schmelzebereich des weichen Polyolefins oder der Mischung ist der Bereich zwischen dem Erweichungspunkt (B) und dem Schmelzpunkt (C) und de facto der Temperaturbereich in dem der eigentliche Schmelzevorgang stattfindet.

Demgegenüber zeigen nicht-weiche Polyolefine eine 2.Aufheizkurve, die erst bei einer Temperatur von 110 bis 140°C zu steigen beginnt (X) und dann in der Regel über einen steilen Anstieg in ein Maximum Y (Schmelzpunkt Tm) mündet. Auch hier fällt die Aufheizkurve danach auf die Basislinie ab (Z), wenn alle Anteile aufgeschmolzen sind. Ein separater Erweichungspunkt ist in der DSC-Kurve der nicht-weichen Polyolefine in der Regel nicht erkennbar oder ist vom Schmelzepeak so überlagert, daß kein separates erstes Maximum auftritt oder erkennbar ist. Somit weisen die Aufheizkurven der nicht-weichen Polyolefine de facto keinen eigenen Erweichungspunkt auf und keinen Schmelzebereich im Sinne der vorstehenden Definition.

Die Parameter "Schmelzpunkt", "Erweichungspunkt" und "Schmelzebereich" werden mittels DSC-Messung bestimmt und aus der 2. Aufheizkurve der DSC Messung des weichen Polymeren oder der Mischung bestimmt, wobei mit einer Aufheiz- und Abkühlrate von 10K/min geheizt bzw. gekühlt wird.

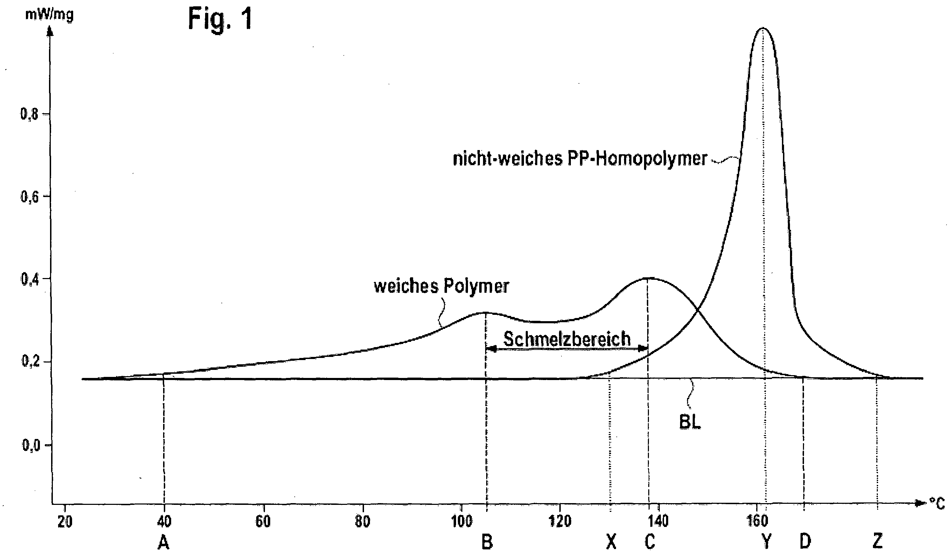

Figur 1 stellt schematisch die 2. Aufheizkurve eines weichen Polyolefins oder einer Mischung und die 2. Aufheizkurve eines nicht-weichen isotaktischen Propylenhomopolymeren im Vergleich dar. In diesem schematischen Beispiel beginnt der Anstieg der Aufheizkurve des weichen Polymeren bei einer Temperatur von ca. 40°C (A). Die DSC Kurve zeigt dann eine kontinuierliche Steigung, d.h. einen immer größer werdenden Abstand von der Basislinie (BL). Der Erweichungspunkt (B) zeigt sich als erstes Maximum bei ca. 105°C deutlich erkennbar vor dem zweiten Maximum bei ca. 135°C (Schmelzpunkt (C)). Die Aufheizkurve fällt dann bei ca. 161°C auf die Basislinie ab, da das Polyolefin dann vollständig geschmolzen und der Schmelzevorgang beendet (D) ist. In diesem schematischen Beispiel beträgt demnach die Breite des Schmelzebereiches ca. 30°C.

Demgegenüber beginnt der Anstieg der Aufheizkurve bei dem nicht-weichen Polymeren bei deutlich höheren Temperaturen, hier beispielsweise bei ca. 130°C. Der Schmelzevorgang setzt dann relativ schnell ein, die DSC Kurve steigt steil an und mündet direkt in den Schmelzpunkt bei 162°C (Y). Bei 168°C (Z) ist der Schmelzvorgang beendet. Die Aufheizkurve fällt auf die Basislinie ab. Das überwiegend kristalline Propylen-Homopolymer zeigt in der DSC-Kurve keinen erkennbaren, separaten Erweichungspunkt. Ein Schmelzebereich im Sinne der vorstehenden Definition läßt sich daher aus der 2. Aufheizkurve der DSC Messung nicht ableiten. De facto findet der Schmelzevorgang in einem wesentlich engeren Temperaturbereich zwischen dem steilen Anstieg und dem steilen Abfall des Schmelzepeaks statt, hier ca. 155 - 162°C, entsprechend einem Bereich von 7°C.

Im Allgemeinen hat das weiche Polyolefin oder die Mischung der Zwischenschicht I, einen Schmelzpunkt Tm (Punkt C in Fig.1) im Bereich von höchstens 150°C, vorzugsweise 70 bis 140°C, insbesondere 80 bis 130°C.

Das weiche Polyolefin oder die Mischung der Zwischenschicht hat im Allgemeinen einen niedrigeren Schmelzpunkt Tm als das Polyolefin der Basisschicht. Die Schmelzpunkte Tm der Basis- und der Zwischenschicht I sollten sich vorteilhafter Weise um mindestens 10°C unterscheiden. Vorzugsweise ist der Schmelzpunkt Tm des weichen Polyolefins oder der Mischung der Zwischenschicht I 15 bis 60°C, insbesondere 30 bis 50°C kleiner als der Schmelzpunkt Tm des Polyolefins der Basisschicht.

Alternativ oder zusätzlich kann auch der Erweichungspunkt herangezogen werden. Weiche Polyolefine zeigen in der DSC-Kurve einen Erweichungspunkt. Dieser Erweichungspunkt des weichen Polyolefins oder der Mischung (Punkt B in Fig.1) liegt im Allgemeinen in einem Bereich von 80 bis 120°C, vorzugsweise 90 bis 110°C, wohingegen das Polyolefin der Basisschicht keinen separaten Erweichungspunkt in der 2. Aufheizkurve aufweist.

Zusätzlich ist es vorteilhaft, daß das Polyolefin oder die Mischung der Zwischenschicht I einen breiten Schmelzbereich (B-C) aufweist. Dies bedeutet, daß in der 2. Aufheizkurve des weichen Polyolefins oder der Mischung ein separater Erweichungspunkt (B) deutlich erkennbar, d.h verschieden vom Schmelzpunkt des weichen Polymeren ist und dieser Erweichungspunkt und der Schmelzpunkt des weichen Polyolefins oder der Mischung mindestens 60K, vorzugsweise 10 bis 50 K auseinander liegen.

Weiche Polyolefine oder Mischungen im Sinne der vorliegenden Erfindung sind dadurch gekennzeichnet, daß deren Aufheizkurve in einem Bereich von 20 bis 70°C, vorzugsweise 25 bis 60°C zu steigen beginnt, wohingegen der analoge Anstieg bei den nicht-weichen Polyolefinen erst in einem Bereich von 110 bis 140°C beginnt.

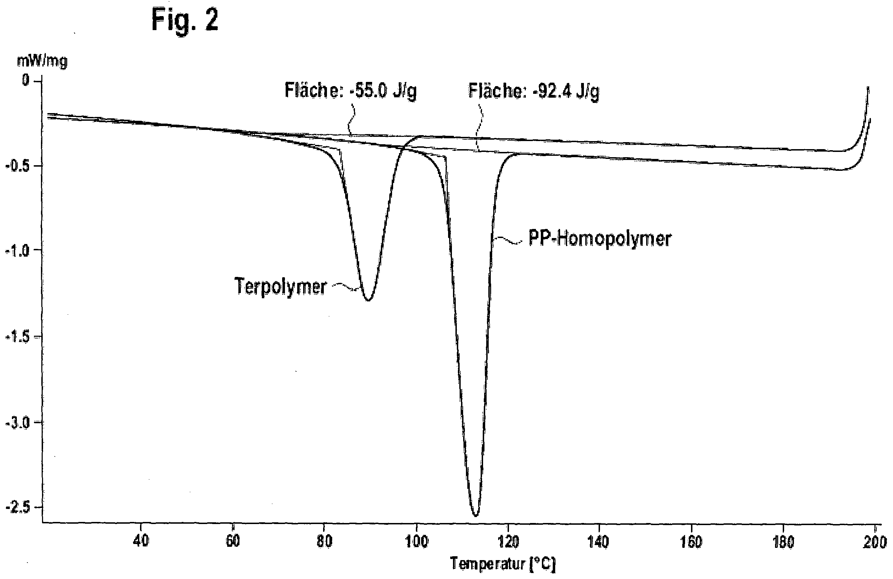

Als weiteres Auswahlkriterium für weiche Polymere kann die Schmelzeenthalpie herangezogen werden. Die Enthalpie der weichen Polymeren ist niedriger als die Enthalpie der Polymeren der Basisschicht. Die Enthalpie wird aus der Abkühlkurve der DSC-Messung als Fläche unter dem Kristallisations-Peak bestimmt. Die Enthalpie der weichen Polymeren liegt im Allgemeinen in einem Bereich von 40 bis 65J/g, vorzugsweise 50 bis 60J/g. Die typische Abkühlkurve eines weichen und eines nicht-weichen Polymeren ist in Figur 2 dargestellt.

Erfindungsgemäß enthält die erste Zwischenschicht I mindestens 40 Gew.%, vorzugsweise 60 bis 100 Gew.-%, insbesondere 75 bis 99 Gew.-% eines weichen Polyolefins, jeweils bezogen auf das Gewicht der Zwischenschicht I, wobei gegebenfalls auch verschiedene weiche Polyolefine miteinander gemischt werden können.

Gegebenenfalls können der Zwischenschicht I Additive in jeweils wirksamen Mengen zugesetzt werden. Des weiteren können zusätzlich Polymere enthalten sein, welche die Kriterien für ein weiches Polyolefin nicht erfüllen. Deren Anteil sollte so gewählt werden, daß die Mischung aus weichen Polymeren und nicht-weichen Polymeren den vorstehend beschriebenen Anforderungen für die weichen Polyolefine entspricht, d.h die vorstehenden beschriebenen Anforderungen bezüglich Schmelzpunkt, Erweichungspunkt, Schmelzbereiches, Merkmale der 2. Aufheizkurve und Enthalpie sollen dann von der Polymermischung erfüllt werden.

Weiche Polyolefine, die die vorstehend beschriebenen Kriterien erfüllen sind beispielsweise Polyolefine aus Olefinen mit 2 bis 10 C-Atomen geeignet, worunter die nachstehend aufgeführten Polymeren aus Ethylen-, Propylen-, und Butyleneinheiten bevorzugt sind. Weiche Polyolefine sind vorzugsweise Polyethylene, Propylencopolymere und/oder Propylenterpolymere, sowie die Propylenhomopolymeren mit niedriger Kristallinität.

Geeignete Propylenco- oder Terpolymere sind im allgemeinen aus mindestens 50 Gew.-% Propylen und Ethylen und/oder Butyleneinheiten als Comonomer aufgebaut. Bevorzugte Mischpolymerisate sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren. Diese Co- und Terpolymeren haben im allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Geeignete weiche Propylenhomopolymere haben bevorzugt eine Isotaktizität von weniger als 95% und einen Xylol-löslicher Anteil von mindestens 3 bis 10 Gew.-%, vorzugsweise 4 bis 7 Gew.-%. Propylenhomopolymeren enthalten 98 bis 100 Gew.-%, vorzugsweise 99 bis 100 Gew.-% Propyleneinheiten und besitzen einen Schmelzpunkt von 150 bis 162°C, vorzugsweise 155 bis 160°C, und im allgemeinen einen Schmelzflußindex von 1 bis 10 g/10 min, vorzugsweise 2 bis 8 g/10 min, bei 230°C und einer Kraft von 21,6 N (DIN 53735).

Geeignete Polyethylene sind beispielsweise HDPE, MDPE, LDPE, LLDPE, VLDPE worunter HDPE und MDPE Typen besonders bevorzugt sind. Das HDPE hat im allgemeinen einen MFI (50 N/190 °C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 °C/min), liegt zwischen 120 und 140 °C. Geeignetes MDPE hat im allgemeinen einen MFI (50 N/190 °C) von größer 0,1 bis 50 g/10 min, vorzugsweise 0,6 bis 20 g/10min, gemessen nach DIN 53 735. Die Dichte, gemessen bei 23 °C nach DIN 53 479, Verfahren A, oder ISO 1183, liegt im Bereich von >0,925 bis 0,94 g/cm³. Der Schmelzpunkt, gemessen mit DSC (Maximum der Schmelzkurve, Aufheizgeschwindigkeit 20 °C/min), liegt zwischen 115 und 130 °C.

In einer weiteren Ausführungsform können Polymere mit sehr niedriger Kristallinität oder überwiegend amorphen Charakter als weiche Polymere für die Zwischenschicht I eingesetzt werden, beispielsweise Elastomere oder heterophasige Mischpolymerisate. Derartige Polymere sind beispielsweise unter den Handelsnamen Adflex (Basell), Koattro (Basell) oder Vistamaxx (ExxonMobil) erhältlich.

### Siegelfähige Deckschicht I

Erfindungsgemäß ist auf der vorstehend beschriebenen weichen Zwischenschicht I eine siegelfähige, erste Deckschicht I aufgebracht. Die siegelfähige Deckschicht I enthält im Allgemeinen mindestens 80 Gew.-%, vorzugsweise 90 bis <100 Gew.% siegelfähige olefinische Polymere oder Mischungen daraus. Geeignete Polyolefine sind beispielsweise Polyethylene, Propylencopolymere und/oder Propylenterpolymere.

Propylenco- oder Terpolymere sind im allgemeinen aus mindestens 50 Gew.-% Propylen und Ethylen und/oder Butyleneinheiten als Comonomer aufgebaut. Bevorzugte Mischpolymerisate sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 30 Gew.-%, bevorzugt 10 bis 25 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren. Diese Co- und Terpolymeren haben im allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Im Hinblick auf die Verwendung der Folie als Beutelverpackung für pulverförmige Füllgüter ist für die siegelfähige Deckschicht I eine Mischung aus den beschriebenen Propylen-Co- und/oder Propylen-Terpolymeren bevorzugt. Diese Deckschichtmischungen sind im Hinblick auf die Siegeleigenschaften der Folie besonders vorteilhaft. Überraschenderweise stören die Verunreinigungen beim Siegeln nicht oder nur noch geringfügig, wenn die Siegelschicht I aus einer Mischung der beschriebenen Propylenco- und oder Propylenterpolymeren aufgebaut ist.

In einer besonders bevorzugten Ausführungsform hat die Deckschicht I eine Siegelanspringtemperatur SIT von unter 110°C, vorzugsweise 75 bis 105°C, insbesondere von 80 bis 100°C. Es wurde überraschenderweise gefunden, daß sich die niedrige SIT in Verbindung mit der weichen Zwischenschicht I und der vakuolenfreien Struktur der Folie positiv in der Anwendung "Beutelverpackung" auswirkt. Die Siegelung ist durch die Verunreinigungen nur unwesentlich beeinträchtigt und die Berstfestigkeit und die mechanische Belastbarkeit der Siegelnaht sind deutlich verbessert, wenn alle drei Merkmale in Kombination miteinander an einer Folie erfüllt sind. Insbesondere zeigt die erfindungsmäße Folie und die Beutelverpackung aus der erfindungsgemäßen Folie eine wesentlich bessere Festigkeit der Siegelnaht. Niedrige Siegelansprintemperaturen bei Verpackungsfolien sind normalerweise erwünscht, wenn schnelle Verarbeitungsgeschwindigkeiten bei der Herstellung von Verpackungen aus der Folien realisiert werden, beispielsweise bei HFFS und VFFS Einschlagsmachinen. Da die Verpackungsgeschwindigkeiten bei der Herstellung von Beutelverpackungen jedoch im Allgemeinen deutlich langsamer sind als beispielsweise auf HFFS-Machinen, gab es für den Fachmann keine Veranlassung die Siegelschicht I so zu gestalten, daß die Folie eine niedrige SIT aufweist. Darüber hinaus war die Auswirkung der niedrigen Siegelanspringtemperatur in Verbindung mit der weichen Zwischenschicht I und der vakuolenfreien Struktur der Folie auf die mechanische Belastbarkeit der Siegelnaht nicht vorhersehbar. Insbesondere war nicht zu erwarten, welche positiven Auswirkungen auf die Beutelverpackung durch die Merkmalskombination erreicht werden.

Propylenco- und Propylenterpolymer, welche für diese Ausführungsformen mit niedriger SIT besonders geeignet sind sind beispielsweise C₃C₄-Copolymer mit einem Butylengehalt von 10 bis 30 Gew.-%, vorzugsweise 12 bis 28 Gew.-% oder C₂C₃C₄-Terpolymer mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren bzw. Mischungen daraus. Diese Polymeren sind beispielsweise den Handelsnamen Mitsui Tafmer XM 7080, Mitsui Tafmer XM 7070 , ExxonMobil Vistamaxx 3980 FL.

Die siegelfähige Deckschicht I wird bevorzugt nicht mittels Corona oder Flamme oder Plasma vorbehandelt. Es wurde gefunden, daß eine unbehandelte Oberfläche der Siegelschicht I die Eigenschaften der Beutelverpackung positiv beeinflußt, insbesondere Druckverluste der Beutelverpackung sind mit einer unbehandelten Siegelschicht I weniger, als bei einer Beutelverpackung mit einer corona- oder anderweitig behandelten Siegelschicht.

In einer weiteren Ausführungsform kann die Siegelschicht I zusätzlich Polyethylene enthalten, im Allgemeinen in einer Menge von 10 bis 40 Gew.-%, vorzugsweise von 15 bis 35 Gew.-%, jeweils bezogen auf die Siegelschicht I. Geeignete Polyethylene sind beispielsweise HDPE, MDPE, LDPE, LLDPE, VLDPE worunter HDPE und MDPE Typen besonders bevorzugt sind. Das HDPE hat im allgemeinen einen MFI (50 N/190 °C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 °C/min), liegt zwischen 120 und 140 °C. Geeignetes MDPE hat im allgemeinen einen MFI (50 N/190 °C) von größer 0,1 bis 50 g/10 min, vorzugsweise 0,6 bis 20 g/10min, gemessen nach DIN 53 735. Die Dichte, gemessen bei 23 °C nach DIN 53 479, Verfahren A, oder ISO 1183, liegt im Bereich von >0,925 bis 0,94 g/cm^{3.}. Der Schmelzpunkt, gemessen mit DSC (Maximum der Schmelzkurve, Aufheizgeschwindigkeit 10 °K/min), liegt zwischen 115 und 130 °C.

### Zweite Deckschicht II / Metallisierte Deckschicht

Die Folie weißt auf der Seite, welche der weichen Zwischenschicht I / siegelfähige Deckschicht I gegenüberliegt eine weitere zweite Deckschicht II auf, welche für die Metallisierung vorgesehen ist. Diese Deckschicht II kann direkt auf der transparenten oder pigmentierten Basisschicht aufgebracht sein oder die Folie hat zwischen der zweiten Deckschicht II und der Basisschicht eine zweite Zwischenschicht 11.

Die zweite Deckschicht II enthält im allgemeinen mindestens 80 Gew.-%, vorzugsweise 90 bis <100 Gew.% olefinische Polymere oder Mischungen daraus. Geeignete Polyolefine sind beispielsweise, Propylencopolymere und/oder Propylenterpolymere, sowie die bereits im Zusammenhang mit der Basisschicht beschriebenen Propylenhomopolymeren.

Geeignete Propylenco- oder Terpolymere sind im allgemeinen aus mindestens 50 Gew.-% Propylen und Ethylen und/oder Butyleneinheiten als Comonomer aufgebaut. Bevorzugte Mischpolymerisate sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren. Diese Co- und Terpolymeren haben im allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Des weiteren können für die zweite Deckschicht II Propylenpolymere mit einem niedrigem Ethylengehalt und einem hohem Schmelzpunkt eingesetzt werden. Diese Polymere sind als Mini-Copolymere an sich bekannt. Für diese Ausführungsformen sind Propylen-Ethylen-Copolymere mit einem Ethylengehalt von 0,5 bis 3,0 Gew.-%, insbesondere 0,8 bis 2,5 Gew.-%, vorzugsweise 1,0 bis <2 Gew.-%, besonders bevorzugt. Deren Schmelzpunkt liegt vorzugsweise in einem Bereich von 150 bis 155°C und die Schmelzeenthalpie vorzugsweise in einem Bereich von 90 bis 100J/g. Der Schmelzflußindex beträgt im allgemeinen 3 bis 15g/10min, vorzugsweise 3 bis 9g/10min (230°C, 21,6N DIN 53 735).

Zur Verbesserung der Metallhaftung wird die Oberfläche der zweiten Deckschicht II im Allgemeinen in an sich bekannter Weise mittels Corona, Flamme oder Plasma einem Verfahren zur Erhöhung der Oberflächenspannung unterworfen. Typischerweise liegt dann die Oberflächenspannung der so behandelten noch nicht metallisierten Deckschicht II in einem Bereich von 35 bis 45 mN/m. Alternativ oder zusätzlich kann die Oberfläche der Deckschicht II unmittelbar vor der Metallisierung einer Plasmabehandlung unterworfen werden, um die Barriereeigenschaften der metallisierten Folie und die Metallhaftung weiter zu verbessern.

Neben diesem Hauptbestandteil kann die zweite Deckschicht II übliche Additive wie Antiblockmittel, Stabilisatoren und/oder Neutralisationsmittel in jeweils wirksamen Mengen enthalten. Im Hinblick auf die Metallisierung sollten Additive, die die Metallisierbarkeit beeinträchtigen, in der Deckschicht II nicht enthalten sein. Dies gilt beispielsweise für migrierende Gleitmittel oder Antistatika.

### Zweite Zwischenschicht II

In einer weiteren erfindungsgemäßen Ausführungsform weißt die Folie eine zweite Zwischenschicht II auf, die zwischen der metallisierbaren, zweiten Deckschicht II und der Basisschicht angebracht ist.

Diese zweite Zwischenschicht II kann grundsätzlich aus den für die zweite Deckschicht II beschriebenen Polymeren aufgebaut sein, wobei hierunter die genannten Propylenhomopolymere oder die beschriebenen Mini-Copolymeren bevorzugt sind. Im allgemeinen enthält die zweite Zwischenschicht II mindesten 80 Gew.-%, vorzugsweise 95 bis 100 Gew.-%, insbesondere 98 bis <100 Gew.-% Propylenpolymere, wobei die Zusammensetzung der zweiten Deckschicht II und der zweiten Zwischenschicht II im Allgemeinen nicht identisch ist.

Die Ausführungsformen mit einer Kombination aus zweiter Zwischenschicht II und zweiter Deckschicht II sind vorteilhaft im Hinblick auf mögliche verschiedene Additivierungen der einzelnen Schichten. So ist es beispielsweise möglich Antiblockmittel nur der Deckschicht II zuzufügen und die Zwischenschicht II frei von anderweitigen Zusatzstoffen zu halten. Im allgemeinen werden jedoch beide Schichten Stabilisatoren und Neutralisationsmittel enthalten. Insbesondere sind auch in der zweiten Zwischenschichten II im wesentlichen keine vakuolenhaltigen Füllstoffe enthalten. TiO₂ kann ohne wesentliche technische Nachteile zugefügt werden, wobei die Menge im Hinblick auf eine glatte, metallisierbare Oberfläche weniger als 10 Gew.- %, bezogen auf die Zwischenschicht II, betragen sollte.

Die Gesamtdicke der Folie kann innerhalb weiter Grenzen variieren, bevorzugte Ausführungsformen haben eine Gesamtdicken von 10 bis 150 µm, vorzugsweise von 12 bis 100 µm, insbesondere 15 bis 50 µm, haben. Die Basisschicht ist im Sinne der vorliegenden Erfindung diejenige Schicht, welche mehr als 50 % der Gesamtdicke der Folie ausmacht. Ihre Dicke ergibt sich aus der Differenz von Gesamtdicke und der Dicke der aufgebrachten Deck- und Zwischenschichten.

Die erfindungsgemäße Folie ist im allgemeinen mindestens vierschichtig und umfaßt als wesentliche Schichten immer die Basisschicht (BS) und eine erste siegelfähige Deckschicht I (DSI), eine erste Zwischenschicht I (ZWSI), sowie eine zweite metallisierbare Deckschicht II (DSII), gemäß einem Aufbau DSI / ZWSI / BS / DSII. Gegebenenfalls umfaßt die Folie eine zweite Zwischenschicht II ZWSII, gemäß einem Aufbau DSI / ZWSI / BS / ZWSII / DSII. Je nach Einsatzbereich kann die Folie auch noch weitere Schichten umfassen.

Die Dicke der ersten siegelfähigen Deckschicht I beträgt im-Allgemeinen- 0,5 bis 5µm, vorzugsweise 0,5 bis 3µm, insbesondere 0,8 bis 2,5µm.

Die Dicke der ersten Zwischenschicht I beträgt 1,0 bis 12µm, vorzugsweise 1,5 bis 10µm, insbesondere 2,0 bis 7,0µm.

Die Dicke der zweiten metallisierbaren Deckschicht II beträgt im Allgemeinen 0,5 bis 5µm, vorzugsweise 0,5 bis 3µm, insbesondere 0,8 bis 2,5µm.

Die Dicke der zweiten Zwischenschicht II beträgt im Allgemeinen 0,5 bis 10µm, vorzugsweise 0,8 bis 8µm, insbesondere 1,0 bis 5,0 µm.

Um bestimmte Eigenschaften der erfindungsgemäßen Polypropylenfolie noch weiter zu verbessern, können sowohl die Basisschicht als auch die Zwischenschichtlen und /oder die Deckschicht/en Zusätze in einer jeweils wirksamen Menge enthalten, vorzugsweise Antistatika und/oder Antiblockmittel und/oder Gleitmittel und/oder Stabilisatoren und/oder Neutralisationsmittel, die mit den Polymeren der Schichten verträglich sind, mit Ausnahme der in der Regel unverträglichen Antiblockmittel. Alle Mengenangaben in der folgenden Ausführung in Gewichtsprozent (Gew.-%) beziehen sich auf die jeweilige Schicht, der das Additiv zugesetzt sein kann.

Im Allgemeinen enthalten alle Schichten der Folie vorzugsweise Neutralisationsmittel und Stabilisatoren in jeweils wirksamen Mengen.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat und/oder synthetisches Dihydrotalcit (SHYT) einer mittleren Teilchengröße von höchstens 0,7 µm, einer absoluten Teilchengröße von kleiner 10 µm und einer spezifischen Oberfläche von mindestens 40 m²/g. Im allgemeinen werden Neutralisationsmittel in einer Menge von 50 bis 1000 ppm, bezogen auf die Schicht eingesetzt.

Antiblockmittel werden der zu metallisierenden Deckschicht I und/oder der siegelfähigen Deckschicht II zugesetzt, wobei Ausführungsformen mit Antiblockmittel in beiden Deckschichten bevorzugt sind. Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen oder vernetzte Polymere wie vernetztes Polymethylmethacrylat oder vernetzte Siliconöle. Polymethylmethacrylat, Siliciumdioxid und Calciumcarbonat sind bevorzugt. Die mittlere Teilchengröße liegt zwischen 1 und 6 µm, insbesondere 2 und 5 µm. Die wirksame Menge an Antiblockmittel liegt im Bereich von 0,1 bis 5 Gew.-%, vorzugsweise 0,5 bis 3 Gew.-%, insbesondere 0,8 bis 2 Gew.-%.

Gleitmittel werden vorzugsweise der Basisschicht, der ersten Zwischenschicht I und/oder der ersten Deckschicht I zugesetzt. Gleitmittel sind höhere aliphatische Säureamide, höhere aliphatische Säureester und Metallseifen sowie Polydimethylsiloxane. Die wirksame Menge an Gleitmittel liegt im Bereich von 0,01 bis 3 Gew.-%, vorzugsweise 0,02 bis 1 Gew.-% bezogen auf die jeweilige Deckschicht. Besonders geeignet ist der Zusatz von 0,01 bis 0,3 Gew.-% aliphatischer Säureamide, wie Erucasäureamid oder 0,02 bis 0,5 Gew.-% von Polydimethylsiloxanen, insbesondere Polydimethylsiloxane mit einer Viskosität von 5 000 bis 1 000 000 mm²/s.

Antistatika werden gegebenenfalls der Basisschicht, der ersten Zwischenschicht I und/oder der ersten Deckschicht I zugesetzt. Bevorzugte Antistatika sind Glycerinmonostearate, Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit alpha-Hydroxy-(C1-C4)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Alle vorstehenden Angaben in Gew.-% beziehen sich auf das Gewicht der jeweiligen Schicht in der das Additiv enthalten ist.

Die Erfindung betrifft weiterhin ein Verfahren zur Herstellung der erfindungsgemäßen Mehrschichtfolie nach dem an sich bekannten Coextrusionsverfahren, wobei insbesondere das Stenterverfahren bevorzugt ist.

Im Rahmen dieses Verfahrens werden die den einzelnen Schichten der Folie entsprechenden Schmelzen durch eine Flachdüse coextrudiert, die so erhaltene Folie zur Verfestigung auf einer oder mehreren Walze/n abgezogen, die Folie anschließend gestreckt (orientiert), die gestreckte Folie thermofixiert und gegebenenfalls an der zur Behandlung vorgesehenen Oberflächenschicht plasma- corona- oder flammbehandelt.

Im Einzelnen wird hierbei wie beim Extrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Alternativ können diese Zusatzstoffe auch über ein Masterbatch eingearbeitet werden.

Die Schmelzen werden dann gemeinsam und gleichzeitig durch eine Flachdüse (Breitschlitzdüse) gepreßt, und die ausgepreßte mehrschichtige Folie wird auf einer oder mehreren Abzugswalzen bei einer Temperatur von 5 bis 100 °C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 80 bis 150 °C zweckmäßigerweise mit Hilfe zweier entsprechend dem angestrebten Streckverhältnis verschieden schnellaufender Walzen durchführen und das Querstrecken vorzugsweise bei einer Temperatur von 120 bis 170°C mit Hilfe eines entsprechenden Kluppenrahmens. Die Längsstreckverhältnisse liegen im Bereich von 4 bis 8 vorzugsweise 4,5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt. Diese Verfahren sind an sich im Stand der Technik bekannt und vielfach in Folienpatenten beschrieben.

Bevorzugt wird/werden nach der biaxialen Streckung die Oberfläche der Deckschicht II nach einer der bekannten Methoden plasma-, corona- oder flammbehandelt. Die Behandlungsintensität liegt im allgemeinen im Bereich von 35 bis 50 mN/m, vorzugsweise 37 bis 45 mN/m, insbesondere 39 bis 40mN/m.

Für die alternative Coronabehandlung wird die Folie zwischen zwei als Elektroden dienenden Leiterelementen hindurchgeführt, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 37 bis 45 mN/m bevorzugt sind.

Die coextrudierte mehrschichtige Folie wird nach den an sich bekannten Verfahren auf der äußeren Oberfläche der zweiten Deckschicht II mit einer Metallschicht, vorzugsweise aus Aluminium versehen. Diese Metallisierung erfolgt in einer Vakuumkammer in der z.B. Aluminium verdampft und auf der Folienoberfläche niedergeschlagen wird. In einer bevorzugten Ausführungsform wird die zu metallisierende Oberfläche der Deckschicht II unmittelbar vor der Metallisierung einer Plasmabehandlung unterworfen. Die Dicke der Metallschicht korreliert im allgemeinen mit der optischen Dichte der metallisierten Folie, d.h. je dicker die Metallschicht ist, umso höher ist die optische Dichte der metallisierten Folie. Im allgemeinen sollte die optische Dichte der erfindungsgemäße metallisierte Folie mindestens 2, insbesondere 2,5 bis 4 betragen. Die so metallisierte Folie kann direkt zur Herstellung von Beutelverpackungen eingesetzt werden, beispielsweise für Verpackungen von Kartoffelpüreeflocken, Kaffepulver, etc..

Die erfindungsgemäße Folie zeichnet sich nach der Metallisierung durch hervorragende Barrierewerte aus. Die Wasserdampfdurchlässigkeit der erfindungsgemäßen metallisierten Folie liegt im allgemeinen < 0,5 g/m² * Tag bei 38°C und 90% relativer Luftfeuchte, vorzugsweise in einem Bereich von 0,05 bis 0,3 g/m² * Tag. Die Sauerstoffdurchlässigkeit beträgt vorzugsweise <50 cm³/m²*Tag*bar, vorzugsweise 5 bis 30 cm³/m²*Tag*bar, insbesondere 5 bis 25 cm³/m²*Tag*bar.

In einer bevorzugten Ausführungsform wird die erfindungsgemäße metallisierte Folie mit einer weiteren, vorzugsweise biaxial orientierten Folie laminiert, wobei die Laminierung gegen die metallisierte Seite der metallisierten erfindungsgemäßen Folie erfolgt. Die weitere Folie wird vorzugsweise bedruckt, damit die Beutelverpackung ein attraktives Erscheinungsbild aufweist. Grundsätzlich können für die weitere Folie Polyesterfolien, boPP- Folien (transparente oder auch opake boPP Folien) eingesetzt werden. Möglich ist auch die Laminierung der metallisierten Folie gegen Papier. Vorzugsweise wird die metallisierte erfindungsgemäße Folie gegen eine opake mehrschichtige boPP Folie laminiert, welche eine vakuolenhaltige Basischicht und eine bedruckbare Deckschicht aufweist. Geeignet sind beispielsweise vierschichtige Folien mit einer Deckschicht auf einer Oberfläche der Basisschicht, die für die Laminierung gegen die Metallschicht geeignet ist und einer Kombination aus Homopolymer-Zwischenschicht, die gegebenenfalls mit TiO₂ modifizierte ist, und darauf aufgebrachter bedruckbarer Deckschicht auf der gegenüberliegenden Oberfläche der Basisschicht. Diese Laminate zeichnen sich durch einen besonders ansprechenden Oberflächenglanz des fertigen bedruckten Laminats aus und können vorteilhaft für die Herstellung von Beutelverpackungen verwendet werden.

Die erfindungsgemäße Folie zeichnet sich durch außergewöhnliche Siegeleigenschaften aus, insbesondere dadurch, daß die erzielten Siegelnahtfestigkeiten ungewöhnlich hoch sind. Bei einer Siegelung der ersten Deckschicht I gegen sich selbst bei 130°C, 10N/cm² und 0,5s beträgt die maximale Siegelnahtfestigkeit mindestens 6 N/15mm, vorzugsweise 6,5 bis 10N/15mm.

Beutelverpackungen, welche die erfindungsgemäße Folie umfassen zeigen einen hervorragenden Berstdruck. Gelingt es die Beutelverpackung ohne wesentliche Kontamination der Siegelnaht herzustellen, zeigt die Beutelverpackung einen Berstdruck im Bereich von 300 bis 1000mbar, vorzugsweise 350 bis 900mbar, insbesondere 400 bis 800mbar. Wenn die Siegelnaht durch Stäube verunreinigt wird, hat die Beutelverpackung noch immer einen Berstdruck von 150 bis 400mbar, vorzugsweise 200 bis 350mbar, insbesondere von 250 bis 350mbar. Der mittlere Druckverlust der Beutelverpackung beträgt vorzugsweise weniger als 1mbar für unkontaminierte Siegelungen und 3 bis 15mbar bei Beuteln mit einer kontaminierten Siegelnaht.

Zur Charakterisierung der Rohstoffe und der Folien und der Beutel wurden die folgenden Meßmethoden benutzt:

### Schmelzflußindex

Der Schmelzflußindex wurde nach DIN EN ISO 1133-1 gemessen.

### Wasserdampf- und Sauerstoffdurchlässigkeit

Die Wasserdampfdurchlässigkeit wird gemäß DIN 53 122 Teil 2 bestimmt. Die Bestimmung der Sauerstoffbarrierewirkung erfolgt gemäß Entwurf DIN 53 380 Teil 3 bei einer Luftfeuchte von 50 %.

### Bestimmung des Ethylengehalts

Der Ethylengehalt der Copolymeren wird mittels ¹³C-NMR Spektroskopie bestimmt. Die Messungen wurden mit einem Kernresonanzspektrometer der Firma Bruker Avance 360 durchgeführt. Das zu charakterisierende Copolymer wird in Tetrachlorethan gelöst, so daß eine 10% Mischung entsteht. Als Bezugsstandard wurde Octamethyltetrasiloxan (OTMS) zugegeben. Das Kernresonanzspekrum wurde bei 120°C gemessen. Die Auswertung der Spektren erfolgte wie in J.C. Randall Polymer Sequence Distribution (Academic Press, New York, 1977) beschrieben.

### Schmelzpunkt, Schmelzebereich, Schmelzenthalpie, Erweichungspunkt ISO 11357-3

Der vorstehend genannten Parameter der Polyolefine werden aus einer DSC Kurve des jeweiligen Polymeren oder der jeweiligen Polymermischung ermittelt. Bei der DSC Messung wird dem Polymeren oder der Polymermischung mit einer definierten Aufheizrate eine Wärmemenge pro Zeiteinheit zugeführt und der Wärmestrom gegen die Temperatur aufgetragen, d.h. die Änderung der Enthalpie als abweichender Verlauf des Wärmestroms von der Basislinie gemessen. Unter der Basislinie (BL) versteht man den (linearen) Teil oder Beginn der Kurve in dem keine Phasen-Umwandlungen stattfinden und damit keine Steigung verzeichnet wird. Hier gilt ein linearer Zusammenhang zwischen der zugeführten Wärmemenge und der Temperatur. In dem Bereich in dem Schmelzevorgänge stattfinden erhöht sich der Wärmestrom um die notwendige Schmelzenergie und die DSC Kurve steigt an und weicht von der Basislinie ab. In dem Bereich in dem die meisten Kristallite schmelzen durchläuft die Kurve ein Maximum und fällt, nach dem alle Kristallite aufgeschmolzen sind, wieder auf die Basislinie ab.

Der Schmelzpunkt ist im Sinne der vorliegenden Erfindung das höchste Maximum der 2. Aufheizkurve der DSC Messung (Punkt C oder Y in Figur I). Der Beginn der 2. Aufheizkurve ist im Sinne der vorliegenden Erfindung diejenige Temperatur bei der die 2.Aufheizkurve von der Basislinie abweicht und der Anstieg Kurve beginnt (Punkt A oder X in Figur 1). Entsprechend ist das Ende diejenige Temperatur bei der die Kurve wieder auf die Basislinie abgefallen ist (Punkt D oder Z in Fig 1). Der Erweichungspunkt ist der Punkt in dem die 2. Aufheizkurve ein erstes lokales Maximum (Punkt B in Figur 1) erreicht. Dieser Erweichungspunkt tritt bei den nicht-weichen Propylenhomopolmyeren nicht auf. Der Schmelzebereich ist der Abstand der Punkte B und C in der 2. Aufheizkurve.

Die DSC-Messung erfolgt mit eine Probe von 2 bis 6mg in einem Differentialkalorimeter mit einer Aufheiz- und Abkühlgeschwindigkeit von 10K/1min im Bereich von 20 bis 200°C. Es wird zunächst eine erste DSC-Kurve aufgenommen und danach die Probe abgekühlt. Anschließend erfolgt unter gleichen Bedingungen die Aufnahme der zweiten Aufheizkurve, welche für die Bestimmung des Schmelzebereichs, Schmelzpunkts und der Erweichungspunkt wie vorstehend beschrieben ausgewertet wird. Die Enthalpie wird aus der Abkühlkurve (Figur 2) bestimmt.

### Metallhaftung

Die oberflächen-behandelten Folien wurden 14 Tage nach ihrer Produktion (Kurzzeitbeurteilung) bzw. 6 Monate nach ihrer Produktion (Langzeitbeurteilung). metallisiert. Die Metallhaftung wurde mittels Klebebandtest beurteilt. Konnte mittels Klebeband keine Farbe bzw. kein Metall abgelöst werden, so wurde die Haftung mit sehr gut und bei deutlicher Ablösung von Farbe bzw. Metall mit schlecht beurteilt.

### Bestimmung der Siegelanspringtemperatur

Mit dem Siegelgerät HSG/ET der Firma Brugger werden gesiegelte Proben (Siegelnaht 20 mm x 100 mm) hergestellt, indem die Deckschicht I der Folie bei unterschiedlichen Temperaturen mit Hilfe zweier beheizter Siegelbacken bei einem Siegeldruck von 10 N/cm² und einer Siegeldauer von 0,5 s gegen sich selbst gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur SIT ist die Temperatur, bei der eine Siegelnahtfestigkeit von mindestens 0,5 N/15 mm erreicht wird.

### Maximale Siegelnahtfestigkeit

Mit dem Siegelgerät HSG/ET der Firma Brugger werden gesiegelte Proben (Siegelnaht 20 mm x 100 mm) hergestellt, indem die Deckschicht I der Folie mit Hilfe zweier beheizter Siegelbacken bei einer Temperaturen von 130°C und bei einem Siegeldruck von 10 N/cm² und einer Siegeldauer von 0,5 s gegen sich selbst gesiegelt wird. Aus den gesiegelten Proben werden Prüfstreifen von 15 mm Breite geschnitten. Die T-Siegelnahtfestigkeit, d. h. die maximale, zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die maxiamle Siegelnahtfestigkeit ist das Maximum der Kurve, die bei dieser Prüfung aufgenommen wird.

### Lichtdurchlässigkeit

Die Lichtdurchlässigkeit wird in Anlehnung an ASTM D 1003 gemessen.

### Dichte

Die Dichte wird nach DIN EN ISO 1183-1, Verfahren A, bestimmt.

### Oberflächenspannung

Die Oberflächenspannung wurde mittels Tintenmethode nach DIN ISO 8296 bestimmt.

### Prüfung der Beutelverpackungen

### Herstellung des Vier-Rand Beutels ohne Kontamination

Es werden zwei Folienlagen mit einer Größe von 160 x 150 mm ausgeschnitten und jeweils mit ihrer Siegelseite (Deckschicht I) aufeinandergelegt. Alle vier Ränder werden mit einem Heißsiegelgerät der Fa. Brugger mit einer Temperatur von 140°C, einem Anpreßdruck von 52 N/cm² und einer Kontaktzeit von 2 s gesiegelt.

### Herstellung des Vier-Rand Beutels mit Staub-Kontamination im Siegelbereich

Es werden zwei Folienlagen mit einer Größe von 160 x 150 mm ausgeschnitten und auf der Siegelseite (Deckschicht I) mit handelsüblichem Weizenmehl bestreut. Der Überschuß des Weizenmehls wird mittels Druckluft abgeblasen. Die derart mit Stäuben kontaminierten Siegelseiten (Deckschicht I) werden aufeinandergelegt. Alle vier Ränder werden mit einem Heißsiegelgerät der Fa. Brugger mit einer Temperatur von 140°C, einem Anpreßdruck von 52 N/cm² und einer Kontaktzeit von 2 s gesiegelt.

### Berst- und Dichtigkeitsprüfungen

Die Berst- und Dichtigkeitsprüfungen der Beutel werden mittels der nachstehend beschriebenen Methoden durchgeführt. Dafür wird jeder zu prüfende Beutel mittig mit dem Prüfkopf des Skye-Testers (beispielsweise Skye 2500SL der Firma Mocon) durchstoßen. Ein Ausdehnungsbegrenzer, der auf eine Höhe von 20 mm eingestellt ist, verhindert, daß sich ein Beutel übermäßig und ballonartig aufblähen kann.

### Berstprüfung

Jeder zu prüfende Beutel wird auf dem Skye-Tester mit einem Druckanstieg von 10 mbar/s bis zum Platzen aufgeblasen. Der höchste Innendruck, den ein Beutel erreicht, wird als Berstdruck (maximaler Überdruck) notiert. Diese Prüfung wird an mindestens 10 Beuteln durchgeführt.

### Dichtigkeitsprüfung

Der Beutel wird auf einen Vordruck von ca. 50 - 60% des ermittelten Berstdrucks aus der vorangegangenen Berstprüfung aufgeblasen. Nach Erreichen dieses Vordrucks wird der Druckverlust über einen Zeitraum von 30 s gemessen und notiert. Auch diese Prüfung wird an mindestens 10 Beuteln durchgeführt. Bei einigen Vergleichsbeispielen kommt es vor, daß die Beutel bei dieser Dichtigkeitsprüfung versagen. Dies bedeutet, daß bereits vor Ablauf der 30s kein Überdruck mehr vorhanden ist und der Skye Tester automatisch abschaltet.

Die Erfindung wird nunmehr durch die nachfolgenden Beispiele erläutert.

### Beispiel 1:

Nach dem Coextrusionsverfahren wurde aus einer Breitschlitzdüse bei einer Extrusionstemperatur von 240 bis 270°C eine fünfschichtige Vorfolie extrudiert. Diese Vorfolie wurde zunächst auf einer Kühlwalze abgezogen und abgekühlt. Anschließend wurde die Vorfolie in Längs- und Querrichtung orientiert und abschließend fixiert. Die Oberfläche der zweiten Deckschicht II wurde mittels Corona zur Erhöhung der Oberflächenspannung vorbehandelt. Die fünfschichtige Folie hatte einen Schichtaufbau: erste Deckschicht I /erste Zwischenschicht I / Basisschicht / Zweite Zwischenschicht II / zweite Deckschicht II II. Die einzelnen Schichten der Folie hatten die folgende Zusammensetzung:

### Erste Deckschicht I (1,5 µm):

ca. 30 Gew.% Propylen-Butylen-Copolymerisat mit einem Butylen-Anteil von 25 Gew.% (bezogen auf das Copolymer) und einem Schmelzpunkt von 75 °C; und einem Schmelzflußindex von 7,0. g/10 min bei 230 °C und 2,16 kg Belastung
ca. 60 Gew.-% Ethylen-Propylen-Butylen-Terpolymer mit einem Schmelzpunkt von 135°C und einem Schmelzflußindex von 5,5 g/10 min bei 230°C und 2,16 kg Belastung
0,13 Gew-% Polymethylmethacrylat (PMMA)

### Erste Zwischenschicht 1 (4µm):

ca. 50 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung und
ca. 50 Gew.-% Ethylen-Propylen-Butylen-Terpolymer mit einem Schmelzpunkt von 135°C und einem Erweichungspunkt von 103°C und einem Schmelzflußindex von 5,5 g/10 min bei 230°C und 2,16 kg Belastung

### Basisschicht:

Ca. 100 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung

### Zweite Deckschicht II (1,0 µm):

99,7 Gew.-% Propylen-Butylen-Copolymerisat mit einem Butylen-Anteil von 5 Gew.% (bezogen auf das Copolymer) und einem Schmelzpunkt von 140. °C; und einem Schmelzflußindex von 5,5 g/10 min bei 230 °C und 2,16 kg Belastung
0,3 Gew.-% Antiblockmittel mit einem mittleren Teilchendurchmesser ca. 4µm (Sylobloc 45)

Alle Schichten der Folie enthielten zusätzlich Stabilisator und Neutralisationsmittel in üblichen Mengen.

Im einzelnen wurde die folgenden Bedingungen und Temperaturen bei der Herstellung der Folie gewählt:

| | |
|---|---|
| Extrusion: | Extrusionstemperatur ca. 250 -270°C |
| Abkühlwalze: | Temperatur 30°C, |
| Längsstreckung: | T = 125 °C |
| Längsstreckung um den | Faktor 5 |
| Querstreckung: | T = 165 °C |
| Querstreckung um den | Faktor 9 |
| Fixierung | T = 143°C |

Die Folie wurde auf der Oberfläche der zweiten Deckschicht II mittels Corona oberflächenbehandelt und wies auf dieser Seite eine Oberflächenspannung von 40mN/m auf. Die Folie hatte eine Dicke von 30 µm und ein transparentes Aussehen.

### Beispiel 2

Es wurde eine Folie nach Beispiel 1 hergestellt. Im Unterschied zu Beispiel 1 wurde eine zweite Zwischenschicht mit der folgenden Zusammensetzung eingefügt:
Zweite Zwischenschicht II (1,5µm):
ca. 100 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung

### Beispiel 3

Es wurde eine Folie nach Beispiel 1 hergestellt. Im Unterschied zu Beispiel 1 wurde die Zusammensetzung der ersten Zwischenschicht I geändert. Die erste Zwischenschicht I hatte jetzt die folgende Zusammensetzung:
Erste Zwischenschicht I (4µm):
ca. 50 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung und
ca 50 Gew.-% Propylen-Butylen-Copolymerisat mit einem Butylen-Anteil von 25 Gew.% (bezogen auf das Copolymer) und einem Schmelzpunkt von 75 °C; und einem Erweichungspunkt von einem Schmelzflußindex von 7,0 g/10 min bei 230 °C und 2,16 kg Belastung

### Beispiel 4

Es wurde eine Folie nach Beispiel 2 hergestellt. Im Unterschied zu Beispiel 2 wurden der Basisschicht TiO₂ Pigmente zugefügt. Die Basisschicht hatte jetzt folgende Zusammensetzung:
ca. 97 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung
3,0 Gew.-% TiO₂ über Masterbatch P87286, Lieferant Firma Schulman GmbH, Hüttenstraße 211, D-54578 Kerpen.

### Beispiel 5

Es wurde eine Folie nach Beispiel 1 hergestellt. Im Unterschied zu Beispiel 1 wurde die Zusammensetzung der Zwischenschicht I wie folgt geändert:
ca. 70 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735) und
ca. 30 Gew.-% Polyethylen (MDPE; Dichte 0,924 g/cm³) mit einem Schmelzpunkt von 125°C und einem Erweichungspunkt von 114°C und einem Schmelzflußindex von 0,15 g/10 min bei 190°C und 2,16 kg Belastung

### Vergleichsbeispiel 1

Es wurde eine Folie nach Beispiel 1 hergestellt. Im Unterschied zu Beispiel 1 wurden der Basisschicht CaCO₃ und TiO₂ zugefügt. Die Basisschicht hatte jetzt folgende Zusammensetzung:

| | |
|---|---|
| ca. 93 Gew.-% | Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung |
| 4,0 Gew.-% | CaCO₃ des Typs ^{®}Omyalite 90T, Lieferant für Masterbatche Firma Multibase, Z.I. du Giers, F-38380 Saint-Laurent-du-Pont, Frankreich; |
| 3,0 Gew.-% | TiO₂ über Masterbatch P87286, Lieferant Firma Schulman GmbH, Hüttenstraße 211, D-54578 Kerpen. |

Die Folie hatte jetzt ein weiß opakes Aussehen und auf Grund von Vakuolenbildung in der Basisschicht eine reduzierte Dichte von 0,75 g/cm³.

### Vergleichsbeispiel 2

Es wurde eine Folie nach Beispiel 1 hergestellt. Im Unterschied zu Beispiel 1 wurde die weiche erste Zwischenschicht I weggelassen, so daß eine nur dreischichtige Folie aus Basisschicht, erster und zweiter Deckschicht hergestellt wurde.

### Vergleichsbeispiel 3

Es wurde eine Folie nach VB2 hergestellt. Im Unterschied zu VB1 wurde für die Deckschicht I folgende Mischung verwendet:
ca. 50 Gew.% Propylen-Butylen-Copolymerisat mit einem Butylen-Anteil von 25 Gew.% (bezogen auf das Copolymer) und einem Schmelzpunkt von 75 °C; und einem Schmelzflußindex von 7,0. g/10 min bei 230 °C und 2,16 kg Belastung
ca. 50 Gew.-% Ethylen-Propylen-Butylen-Terpolymer mit einem Schmelzpunkt von 135°C und einem Schmelzflußindex von 5,5 g/10 min bei 230°C und 2,16 kg Belastung
0,13 Gew-% Polymethylmethacrylat (PMMA)

### Vergleichsbeispiel 4

Es wurde eine Folie nach Beispiel 1 hergestellt. Im Unterschied zu Beispiel 1 wurden der Zwischenschicht II CaCO3 und TiO2 zugefügt. Die Zwischenschicht hatte jetzt folgende Zusammensetzung:
ca. 93 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735)

| | |
|---|---|
| 4,0 Gew.-% | CaCO₃ des Typs ^{®}Omyalite 90T, Lieferant für Masterbatche Firma Multibase, Z.I. du Giers, F-38380 Saint-Laurent-du-Pont, Frankreich; |
| 3,0 Gew.-% | TiO₂ über Masterbatch P87286, Lieferant Firma Schulman GmbH, Hüttenstraße 211, D-54578 Kerpen. |

Die Folie hatte jetzt ein weiß opakes Aussehen und auf Grund von Vakuolenbildung in der Zwischenschicht eine reduzierte Dichte von 0,90 g/cm³.

Alle Folien nach den Beispielen und den Vergleichsbeispielen wurden in einer Vakuum Metallisieranlage auf der Oberfläche der ersten Deckschicht I mit einer Aluminiumschicht beschichtet. Zur Verbesserung der Metallhaftung wurde die Oberfläche unmittelbar vor der Beschichtung einer Plasmabehandlung unterworfen.

Aus den metallisierten Folien wurde wie in den Testmethoden "Prüfung der Beutelverpackungen" beschrieben Vier-Rand Beutelverpackungen hergestellt. Die Eigenschaften der metallisierten Folien nach den Beispielen und den Vergleichsbeispielen und die Eigenschaften der daraus hergestellten Beutelverpackungen sind in der Tabelle 1 zusammengestellt. Es zeigt sich, daß die erfindungsgemäßen Folien nach den Beispielen 1, 2 und 3 hervorragende Barrierewerte gegen Wasserdampf und Sauerstoff und gleichzeitig gute Siegeleigenschaften trotz Kontamination bei der Verwendung als Beutelverpackungen für pulverförmige Füllgüter aufweisen. Die Beutelverpackungen zeigen eine wesentlich verbesserte Berstfähigkeit und weniger Druckverluste.

| Beispiel | Dicke µm | Dichte der Folie [g/cm³] | Max. Siegelnahtfestigkeit ** bei 130 °C, 10N/cm², 0,5 sec. [N/15mm] | Berstdruck (max. Überdruck) [mbar] | Mittlerer Druckverlust [mbar] | Berstdruck (max. Überdruck) Kontaminierter Siegelbereich [mbar] | Mittlerer Druckverlust [mbar] Kontaminierter Siegelbereich | WDD 38°C 90% rel. Feuchte *** [g/m²*Tag] | OTR 23°C, 50% rel. Feuchte *** [cm³/m²*Ta g*bar] |
|---|---|---|---|---|---|---|---|---|---|
| Bsp. 1 | 30 | 0,91 | 7,9 | 561 - 631 | 0,8 | 187 - 296 | 10,6 | 0,125 | 17,8 |
| Bsp. 2 | 30 | 0,91 | 7,8 | 572 - 617 | 0,5 | 200 - 291 | 9,8 | 0,140 | 21,4 |
| Bsp. 3 | 30 | 0,91 | 8,7 | 601 - 720 | 0,3 | 273 - 386 | 5,5 | 0,155 | 27,0 |
| Bsp. 4 | 30 | 0,92 | 7,6 | 533 - 611 | 0,9 | 177 - 285 | 13,2 | 0,173 | 30,1 |
| Bsp. 5 | 30 | 0,91 | 7,2 | 492 - 573 | 1,4 | 153 - 285 | 11,1 | 0,162 | 25,4 |
| VB 1 | 30 | 0,75 | 2,9 | 112 - 264 | 4,0 | 82 - 154 | 23,7 **** | 0,254 | 89,3 |
| VB 2 | 30 | 0,91 | 5,0 | 214 - 243 | 1,7 | 108 - 151 | 51,1 ***** | 0,168 | 34,2 |
| VB 3 | 30 | 0,91 | 4,6 | 220 - 289 | 1,4 | 123 - 148 | 43,4 ****** | 0,181 | 31,5 |
| VB 4 | 30 | 0,90 | 2,7 | 131-211 | 2,1 | 98 - 139 | 44,1 ******* | 0,225 | 40,4 |

| | | | | | | | | | |
|---|---|---|---|---|---|---|---|---|---|
| ** Siegelung der nicht metallisierten Deckschicht I gegen sich selbst *** nach Metallisierung der Deckschicht II **** nur 1 Beutel von 10 besteht den Test ***** 6 Beutel von 10 versagen während des Tests ****** 4 Beutel von 10 versagen während des Tests ******* nur 1 Beutel von 10 besteht den Test | | | | | | | | | |

## Patentansprüche

1. Biaxial orientierte, mehrschichtige Polypropylenfolie mit mindestens drei Schichten aus
• einer Basisschicht und
• einer ersten Zwischenschicht I und
• einer auf dieser Zwischenschicht I aufgebrachten ersten siegelfähigen Deckschicht I, wobei
• alle Schichten der Folie im Wesentlichen keine Vakuolen enthalten und die Dichte der Folie maximal 5% niedriger ist als die rechnerische Dichte der Folie, **dadurch gekennzeichnet, dass**
a) die Basisschicht mindestens 50 Gew.-%, bezogen auf das Gewicht der Basisschicht, Polypropylen enthält, wobei das Polypropylen einen Schmelzpunkt von 150 bis 170°C hat und 90 bis 100 Gew.-% Propyleneinheiten enthält, und
b) die Dicke der ersten Zwischenschicht I 1, 0 bis 12µm beträgt und wobei
c) die erste Zwischenschicht I eine weiche Zwischenschicht ist, die mindestens 40 Gew.-% eines weichen Polyolefins oder einer Mischung aus dem weichen Polyolefin mit einem weiteren Polyolefin enthält, wobei das weiche Polyolefin oder die Mischung bei einer DSC-Messung eine 2. Aufheizkurve zeigt, welche ab 20 bis 70°C ansteigt (A), ein erstes lokales Maximum bei einer Temperatur von >90°C erreicht und dann in das eigentliche Maximum der Aufheizkurve (C), dem Schmelzpunkt Tm, übergeht und
d) die Dicke der ersten siegelfähigen Deckschicht I 0,5 bis 2,5µm beträgt und
e) die erste siegelfähige Deckschicht I eine Siegelanspringtemperatur von <115°C hat, die, wie in der Beschreibung, beschrieben ermittelt wird,
f) die Folie auf der gegenüberliegenden Seite eine zweite Deckschicht II aufweist und die Oberfläche der zweiten Deckschicht II metallisiert ist.

2. Folie nach Anspruch 1, **dadurch gekennzeichnet, daß** die Folie transparent ist und eine Dichte im Bereich von 0,86 bis 0,92g/cm³ aufweist.

3. Folie nach Anspruch 1 oder 2, **dadurch gekennzeichnet, daß** die Folie Pigmente, vorzugsweise TiO₂, enthält und die Dichte der Folie in einem Bereich von 0,91 bis 0,95g/cm³ liegt.

4. Folie nach einem der Ansprüche 1 bis 3, **dadurch gekennzeichnet, daß** die 2. Aufheizkurve des weichen Polymeren oder der Mischung der ersten Zwischenschicht in einer DSC-Messung einen Erweichungspunkt (B) aufweist und der Erweichungspunkt (B) in einem Bereich von 80 bis 120°C liegt.

5. Folie nach einem der Ansprüche 1 bis 4, **dadurch gekennzeichnet, daß** der Schmelzpunkt (C) des weichen Polymeren oder der Polymermischung in einem Bereich von 70 bis ≤150°C liegt.

6. Folie nach einem der Ansprüche 1 bis 5, **dadurch gekennzeichnet, daß** der Schmelzpunkt (C) des weichen Polymeren oder der Mischung in einem Bereich von 70 bis ≤150°C liegt und 10 bis 50°C höher ist als der Erweichungspunkt (B).

7. Folie nach einem der Ansprüche 1 bis 6, **dadurch gekennzeichnet, daß** der Schmelzpunkt (C) des weichen Polymeren oder Mischung der Zwischenschicht I 15 bis 60°C kleiner ist als der Schmelzpunkt (Y) des Polypropylens der Basisschicht.

8. Folie nach einem der Ansprüche 1 bis 7, **dadurch gekennzeichnet, daß** das weiche Polymere der Zwischenschicht ein Polyethylen, ein Propylencopolymer, ein Propylenterpolymer, ein Elastomer, ein heterophasiges Mischpolymerisat und/oder ein Propylenhomopolymer mit <95% Isotaktizität ist.

9. Folie nach Anspruch 8, **dadurch gekennzeichnet, daß** die Folie auf der Oberfläche der ersten Deckschicht I nicht mittels Corona, Plasma, oder Flamme vorbehandelt ist.

10. Folie nach Anspruch 9, **dadurch gekennzeichnet, daß** die zu metallisierende Oberfläche unmittelbar vor der Metallisierung mittels Plasma behandelt wird und die optische Dichte der Metallschicht mindestens 2,5 beträgt.

11. Verwendung einer Folie nach einem der Ansprüche 1 bis 10 zur Herstellung eines Laminats mit einer weiteren biaxial orientierten Polypropylenfolie, **dadurch gekennzeichnet, daß** die metallisierte Folie mit der metallisierten Seite gegen eine zweite boPP Folie laminiert wird.

12. Verwendung nach Anspruch 11, **dadurch gekennzeichnet, daß** die zweite boPP Folie des Laminats eine vakuolenhaltige Basisschicht aufweist.

13. Verwendung einer Folie nach einem der Ansprüche 1 bis 10 zur Herstellung einer Beutelverpackung.

14. Verwendung nach Anspruch 11, 12 oder 13, **dadurch gekennzeichnet, daß** das Füllgut der Beutelverpackung pulverförmig ist.

15. Beutelverpackung, welche eine Folie nach einem der Ansprüche 1 bis 10 umfaßt, **dadurch gekennzeichnet, daß** die Beutelverpackung einen Berstdruck von mindestens 200mbar, vorzugsweise 220 bis 1000 mbar aufweist.

16. Beutelverpackung, welche eine Folie nach einem der Ansprüche 1 bis 10 umfaßt, **dadurch gekennzeichnet, daß** die Beutelverpackung einen mittleren Druckverlust von weniger als 15mbar aufweist, wobei der Druckverlust über einen Zeitraum von 30 Sekunden gemessen wird.

17. Folie nach einem der Ansprüche 1 bis 10, **dadurch gekennzeichnet daß** die erste siegelfähige Deckschicht I bei einer Temperatur von 130°C mit einem Druck von 10N/cm² für 0,5s gegen sich selbst gesiegelt wird und diese Siegelnaht eine maximale Siegelnahtfestigkeit von über 6 N/15mm aufweist, wobei zur Bestimmung der Siegelnahtfestigkeit die maximale Kraft gemessen wird, die zur Trennung von gesiegelten Probe aus 15mm breiten Prüfstreifen mit einer Zugprüfmaschine bei 200mm/min erforderlich ist.

## Claims

1. Biaxially oriented, multilayer polypropylene film comprising at least three layers consisting of
• a base layer, and
• a first intermediate layer I, and
• a first heat-sealable top layer I applied onto said intermediate layer I, wherein
• substantially all layers of the film are free of voids and the density of the film is at most 5% lower than the calculated density of the film, **characterized in that**
a) the base layer contains at least 50 wt.%, based on the weight of the base layer, of polypropylene, wherein the polypropylene has a melting point of from 150 to 170°C and contains from 90 to 100 wt.% propylene units, and
b) the thickness of the first intermediate layer I is from 1.0 to 12 µm, and
c) the first intermediate layer I is a soft intermediate layer containing at least 40 wt.% of a soft polyolefin or a mixture of the soft polyolefin with a further polyolefin, wherein the soft polyolefin or the mixture exhibits, in a DSC measurement, a second heating curve which rises from 20 to 70°C (A), reaches a first local maximum at a temperature of >90°C, and then merges into the actual maximum of the heating curve (C), corresponding to the melting point Tm, and
d) the thickness of the first heat-sealable top layer I is from 0.5 to 2.5 µm, and
e) the first heat-sealable top layer I has a seal initiation temperature of <115°C, determined as described in the description,
f) the film comprises, on the opposite side, a second top layer II, and the surface of the second top layer II is metallized.

2. Film according to claim 1, **characterized in that** the film is transparent and has a density in the range from 0.86 to 0.92 g/cm³.

3. Film according to claim 1 or 2, **characterized in that** the film contains pigments, preferably TiO₂, and the density of the film is in the range from 0.91 to 0.95 g/cm³.

4. Film according to one of claims 1 to 3, **characterized in that** the second heating curve of the soft polymer or the mixture of the first intermediate layer exhibits, in a DSC measurement, a softening point (B), and the softening point (B) is in the range from 80 to 120°C.

5. Film according to one of claims 1 to 4, **characterized in that** the melting point (C) of the soft polymer or polymer mixture is in the range from 70 to ≤150°C.

6. Film according to one of claims 1 to 5, **characterized in that** the melting point (C) of the soft polymer or mixture is in the range from 70 to ≤150°C and is from 10 to 50°C higher than the softening point (B).

7. Film according to one of claims 1 to 6, **characterized in that** the melting point (C) of the soft polymer or mixture of intermediate layer I is from 15 to 60°C lower than the melting point (Y) of the polypropylene of the base layer.

8. Film according to one of claims 1 to 7, **characterized in that** the soft polymer of the intermediate layer is polyethylene, a propylene copolymer, a propylene terpolymer, an elastomer, a heterophasic polymer blend, and/or a propylene homopolymer having an isotacticity of <95%.

9. Film according to claim 8, **characterized in that** the surface of the first top layer I is not pretreated by corona, plasma, or flame treatment.

10. Film according to claim 9, **characterized in that** the surface to be metallized is plasma-treated immediately before metallization and the optical density of the metal layer is at least 2.5.

11. Use of a film according to one of claims 1 to 10 for producing a laminate with a further biaxially oriented polypropylene film, **characterized in that** the metallized film is laminated with the metallized side facing a second BOPP film.

12. Use according to claim 11, **characterized in that** the second BOPP film of the laminate comprises a void-containing base layer.

13. Use of a film according to one of claims 1 to 10 for producing a pouch package.

14. Use according to claim 11, 12, or 13, **characterized in that** the packaged product of the pouch package is in powder form.

15. Pouch package comprising a film according to one of claims 1 to 10, **characterized in that** the pouch package has a burst pressure of at least 200 mbar, preferably from 220 to 1000 mbar.

16. Pouch package comprising a film according to one of claims 1 to 10, **characterized in that** the pouch package has an average pressure loss of less than 15 mbar, wherein the pressure loss is measured over a period of 30 seconds.

17. Film according to one of claims 1 to 10, **characterized in that** the first heat-sealable top layer I is sealed to itself at a temperature of 130°C under a pressure of 10 N/cm² for 0.5 s, and the resulting seal seam exhibits a maximum seal seam strength of more than 6 N/15 mm, wherein, for determining the seal seam strength, the maximum force required for separating sealed samples from 15 mm wide test strips using a tensile testing machine at 200 mm/min is measured.

## Revendications

1. Film en polypropylène multicouche à orientation biaxiale avec au moins trois couches composées
• d'une couche de base et
• d'une première couche intermédiaire I et
• d'une première couche de recouvrement I scellable appliquée sur ladite couche intermédiaire I, dans lequel
• toutes les couches du film ne contiennent sensiblement pas de vacuoles et la densité du film est inférieure de maximum 5 % à la densité calculée du film, **caractérisé en ce que**
a) la couche de base contient au moins 50 % en poids, par rapport au poids de la couche de base, de polypropylène, dans lequel le polypropylène présente un point de fusion de 150 à 170 °C et contient de 90 à 100 % en poids d'unités de propylène, et
b) l'épaisseur de la première couche intermédiaire I va de 1, 0 à 12 µm et dans lequel
c) la première couche intermédiaire I est une couche intermédiaire souple, qui contient au moins 40 % en poids d'une polyoléfine souple ou d'un mélange de la polyoléfine souple avec une autre polyoléfine, dans lequel la polyoléfine souple ou le mélange indique lors d'une mesure DSC une 2^{e} courbe de chauffe, qui augmente de 20 à 70 °C (A), atteint un premier maximum local à une température >90 °C, puis passe au maximum réel de la courbe de chauffe (C), le point de fusion Tm, et
d) l'épaisseur de la première couche de recouvrement I scellable va de 0,5 à 2,5 µm et
e) la première couche de recouvrement I scellable présente une température d'amorçage de scellage < 115 °C qui est déterminée comme décrit dans la description,
f) le film présente sur le côté opposé une deuxième couche de recouvrement II et la surface de la deuxième couche de recouvrement II est métallisée.

2. Film selon la revendication 1, **caractérisé en ce que** le film est transparent et présente une densité dans la plage de 0,86 à 0,92 g/cm³.

3. Film selon la revendication 1 ou 2, **caractérisé en ce que** le film contient des pigments, de préférence TiO₂, et que la densité du film se situe dans une plage de 0,91 à 0,95 g/cm³.

4. Film selon l'une des revendications 1 à 3, **caractérisé en ce que** la 2^{e}
courbe de chauffe du polymère souple ou du mélange de la première couche intermédiaire dans une mesure DSC présente un point de ramollissement (B) et le point de ramollissement (B) se situe dans une plage de 80 à 120 °C.

5. Film selon l'une des revendications 1 à 4, **caractérisé en ce que** le point de fusion (C) du polymère souple ou du mélange de polymères se situe dans une plage de 70 à ≤150 °C.

6. Film selon l'une des revendications 1 à 5, **caractérisé en ce que** le point de fusion (C) du polymère souple ou du mélange se situe dans une plage de 70 à ≤150 °C et est supérieur de 10 à 50 °C au point de ramollissement (B).

7. Film selon l'une des revendications 1 à 6, **caractérisé en ce que** le point de fusion (C) du polymère souple ou du mélange de la couche intermédiaire I est inférieur de 15 à 60 °C au point de fusion (Y) du polypropylène de la couche de base.

8. Film selon l'une des revendications 1 à 7, **caractérisé en ce que** le polymère souple de la couche intermédiaire est un polyéthylène, un copolymère de propylène, un terpolymère de propylène, un élastomère, un polymérisat mélangé hétérophasique et/ou un homopolymère de propylène avec une isotacticité < 95 %.

9. Film selon la revendication 8, **caractérisé en ce que** le film sur la surface de la première couche de recouvrement I n'est pas prétraité au corona, au plasma ou à la flamme.

10. Film selon la revendication 9, **caractérisé en ce que** la surface à métalliser est traitée au plasma directement avant la métallisation et la densité optique de la couche métallique est d'au moins 2,5.

11. Utilisation d'un film selon l'une des revendications 1 à 10 pour la fabrication d'un stratifié avec un autre film en polypropylène à orientation biaxiale, **caractérisée en ce que** le film métallisé est stratifié avec le côté métallisé contre un deuxième film boPP.

12. Utilisation selon la revendication 11, **caractérisée en ce que** le deuxième film boPP du stratifié présente une couche de base contenant des vacuoles.

13. Utilisation d'un film selon l'une des revendications 1 à 10 pour la fabrication d'un emballage en sachet.

14. Utilisation selon la revendication 11, 12 ou 13, **caractérisée en ce que** le produit de remplissage de l'emballage en sachet est sous forme de poudre.

15. Emballage en sachet, qui comprend un film selon l'une des revendications 1 à 10, **caractérisé en ce que** l'emballage en sachet présente une pression d'éclatement d'au moins 200 mbar, de préférence de 220 à 1000 mbar.

16. Emballage en sachet, qui comprend un film selon l'une des revendications 1 à 10, **caractérisé en ce que** l'emballage en sachet présente une perte de pression moyenne inférieure à 15 mbar, dans lequel la perte de pression est mesurée pendant une période de 30 secondes.

17. Film selon l'une des revendications 1 à 10, **caractérisé en ce que** la première couche de recouvrement I scellable est scellée contre elle-même à une température de 130 °C avec une pression de 10 N/cm² pendant 0,5 s, et cette soudure présente une résistance maximale à la soudure supérieure à 6 N/15 mm, dans lequel, pour déterminer la résistance à la soudure, est mesurée la force maximale qui est nécessaire pour séparer un échantillon scellé composé de bandes d'essai de 15 mm de large avec une machine d'essai de traction à 200 mm/min.
